# EUROPÄISCHE PATENTSCHRIFT

(11) **EP 0 841 380 B1**
(45) Veröffentlichungstag und Bekanntmachung des Hinweises auf die Patenterteilung: **25.08.1999**
(21) Anmeldenummer: 96203101.9
(22) Anmeldetag: 07.11.1996
(51) Int. Cl.: C09D 5/16, C08F 230/04

(54) **Verfahren zur Herstellung von polymeren Bindemitteln und deren Verwendung für Antifouling-Anstrichsysteme**
Method of making polymeric binders and use thereof in antifouling paints
Procédé de préparation de liants polymères et leur utilisation dans les peintures anti-salissures

(43) Veröffentlichungstag der Anmeldung: 13.05.1998
(73) Patentinhaber: Witco GmbH, 59192 Bergkamen (DE)
(72) Erfinder: Schneider, Uwe, Dr., 44319 Dortmund (DE)

(56) Entgegenhaltungen:
- EP-A- 0 151 809
- AU-A- 466 764
- FR-A- 2 369 305
- FR-A- 2 508 915
- FR-A- 2 557 585

## Beschreibung

Die vorliegende Erfindung betrifft ein Verfahren zur Herstellung von polymerisierbaren, langsam hydrolysierbaren Verbindungen, die zur Herstellung von Bindemittelsystemen für Antifouling-Farben zum Schutz von Unterwasserflächen gegen den Bewuchs durch Meeresorganismen verwendet werden können.

Oberflächen, die ständig dem Meerwasser ausgesetzt sind, wie z. B. Schiffe, Bojen, Bohrplattformen, Unterwasserpipelines, Fischnetze etc., werden unter geeigneten Bedingungen innerhalb kurzer Zeit durch Meeresorganismen, wie z. B. Algen, Seegras, Muscheln, Röhrenwürmer, Schwämme etc., besiedelt. Dieser Bewuchs wirkt sich in einer Vielzahl von Fällen äußerst störend und für die Gebrauchseigenschaften vieler Einrichtungen einschränkend und hinderlich aus. So führt z. B. eine Besiedlung von Unterwasser-Schiffsflächen zu einer Einschränkung der Manövrierfähigkeit der Schiffe und aufgrund des erhöhten Reibungswiderstandes im Wasser zu einem deutlichen Mehrverbrauch an Treibstoff.

Aus diesen Gründen finden zum Schutz von Unterwasserflächen vor Besiedlung bewuchsverhindernde Anstrichstoffe, sogenannte Antifouling-Farben, einen breiten Einsatz. Diese Anstrichstoffe bestehen meistens aus einem bioziden oder nicht bioziden polymeren und filmbildenden Bindemittel, Co-Bioziden und Pigmenten.

Häufig angewandte Antifouling-Anstriche der letzten Jahre besitzen neben den bewuchsverhindernden auch selbstglättende Filmeigenschaften (sogenannte "self-polishing" Polymere). In diesen Systemen wird der selbstglättende Effekt durch eine gezielte Hydrolyse funktioneller Gruppen erreicht, die die Oberfläche des Anstrichs hydrophil und damit erodierbar werden läßt; derartige Anstriche sind z. B. in EP-A- 0 289 481 beschrieben. Besonders breite Verwendung haben Antifouling-Farben gefunden, deren Copolymere Triorganozinnester, insbesondere Tri-n-butylzinnester, von ungesättigten Carbonsäuren, z. B. (Meth)acrylsäure, enthalten. Beispiele hierfür finden sich in GB-A-1 457 590. Diese Systeme besitzen aufgrund der langsamen Hydrolyse der Triorganozinnester-Gruppe selbstglättende Eigenschaften und gleichzeitig durch die biozide Wirkung der Organozinn-Verbindung hervorragende Antifouling-Eigenschaften. Diese besonders günstige Eigenschaftskombination hat zu einer weiten Verbreitung der zinnbasierten Antifouling-Farben geführt.

In den vergangenen Jahren wurde über den Einsatz der Tributylzinn- und Triphenylzinn-haltigen Anstrichmittel diskutiert, da nicht in allen Bereichen die bislang üblichen Abgaberaten der zinnorganischen Verbindungen ins Meerwasser erforderlich zu sein scheinen. So ist in einigen Ländern die Abgaberate zinnhaltiger Antifouling-Farben auf 4 µg cm⁻² d⁻¹ TBT (Tributylzinn) beschränkt worden, und ein Einsatz darf nur auf Schiffen mit Längen über 25 m erfolgen. Es besteht daher ein Bedarf an wirksamen, langsam hydrolysierbaren Antifouling-Anstrichsystemen mit reduziertem Zinngehalt und gleichzeitigem Erhalt der selbstglättenden Eigenschaften.

In der Literatur werden verschiedene Beispiele von zinnhaltigen Antifouling-Farben beschrieben, die neben einem Organozinn-haltigen Monomeren noch weitere verschiedene funktionalisierte Monomere enthalten. So werden in EP-A-0 342 493 Copolymere aus Tributylzinnmethacrylat, Acrylamid und Acrylsäure aufgeführt. Andere Systeme werden in EP-A-0 200 433 (Copolymere aus Tributylzinnmethacrylat, Methylmethacrylat, Styrol, Ethylenglykoldimethacrylat und Acrylnitril), AU-A-466 764 (Copolymere aus Tributylzinnacrylat und Vinylacetat) und DD-A-279 258 (Copolymere aus Tributylzinnacrylat, Methylmethacrylat und Polyethylenglykolmonoacrylat) beschrieben. Alle diese Systeme haben jedoch entweder keine kommerzielle Verbreitung gefunden oder weisen nicht die besonders günstige Kombination aus bewuchsverhindernden und selbstglättenden Eigenschaften auf.

Darüberhinaus werden verschiedene Beispiele von Antifouling-Farben, die im Meerwasser hydrolysierbare Gruppen aufweisen, erwähnt. So werden in WO-A-84/02915 eine Vielzahl möglicher Gruppen, die mit Carbonsäuren-haltigen Gruppen leicht hydrolysierbare Verbindungen bilden sollen, aufgeführt. Auch EP-A-0 204 444, EP-A-0 331 147 und GB-A-2 152 947 beschreiben esterhaltige Polymersysteme für den Antifoulingbereich. Alle diese Systeme haben jedoch entweder keine kommerzielle Verbreitung gefunden oder erfordern einen mehrstufigen, relativ aufwendigen Syntheseprozeß zu ihrer Herstellung.

Es wurde nun gefunden, daß Polymere, zusammengesetzt aus einer Kombination aus Organozinn-haltigen (Meth)acrylaten - z.B. Tributylzinnmethacrylat (TBTM) - und speziellen funktionalisierten (Meth)acrylaten besonders günstige Eigenschaftskombinationen für einen Einsatz als Antifouling-Anstrichsystem aufweisen. Dabei kann der Zinngehalt der Polymeren deutlich unter die kommerziell üblichen Werte von ca. 20 Gew.-% (und höher) abgesenkt werden, ohne daß die bewuchsverhindernden und selbstglättenden Eigenschaften verlorengehen. Die durch den geringeren Anteil an Organozinn-haltigen Monomeren reduzierte Hydrolyse wird dabei durch den Gehalt an kontrolliert hydrolysierenden funktionalisierten (Meth)acrylat- Monomeren, die eine ergänzende bewuchsverhindernde Eigenschaft aufweisen können, kompensiert. Diese Hydrolyse in alkalischem Milieu (Meerwasser-pH: 8.1 - 8.3) ist Voraussetzung einerseits für selbstglättende Eigenschaften und andererseits für einen bewuchsverhindernden Effekt der Anstrichfarbe durch langsame, kontinuierliche Abgabe der hydrolysierten Verbindungen. Ein besonderer Vorteil der vorliegenden Erfindung ist, daß die funktionalisierten (Meth)acrylat- Monomeren in einem linearen, wenig verzweigten bzw. vernetzten Polymersystem chemisch gebunden sind und die dadurch mögliche langsame Hydrolyse der Organozinn- und (Meth)acrylsäure-Ester-Gruppen partiell hydrophile und auf diese Weise lösliche Polymeroberflächen erzeugen kann.

Gegenstand der vorliegenden Erfindung sind demnach Bindemittel für Antifouling-Anstrichmittel, herstellbar durch Copolymerisation von polymerisierbaren Monomeren, welche dadurch gekennzeichnet sind, daß als polymerisierbare Monomere Mischungen aus
A) mindestens einer der Verbindungen der allgemeinen Formel I 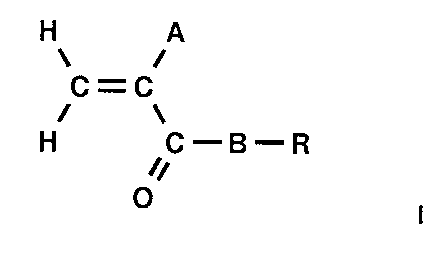 worin bedeuten:
   - A =: H, CH₃
   - B =: O, S
   - R =: Ph(R¹)ₙ, -C(CH₂COOR²)₂(COOR²), -CH₂-CH₂-O-Ph, -C(H)_{3-(p+q)}(CO-R²)ₚ(COOR²)_{q}, gegebenenfalls substituierte Thiadiazolylverbindungen
   - Ph =: Phenyl
   - R¹=: gleich oder verschieden -C(O)H, -COOR², -CH₂-COOR², -O-R², -NH-CO-R², -NH₂, Halogen
   - n =: 1 - 3
   - p =: 0 - 3
   - q =: 0-3
   - p+q =: 1-3
   - R² =: H, gegebenenfalls substituierte Alkyl-, Aryl-, Cycloalkyl-, Aralkyl-Reste mit 1 - 10 C-Atomen
   und
B) mindestens einer ethylenisch ungesättigten Verbindung mit der allgemeinen Formel II 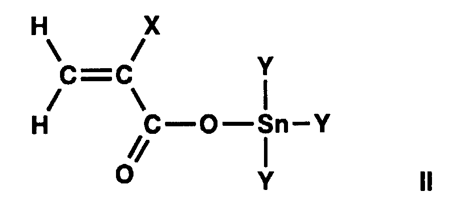 worin bedeuten:
   - X =: H, CH₃
   - Y =: C₄ - C₁₂ Alkyl, Phenyl, Cyclohexyl
   worin das molare Verhältnis von A) : B) zwischen 1 : 1 bis 5 : 1, vorzugsweise zwischen 1,5 : 1 bis 3 : 1, liegt und
C) mindestens einer ethylenisch ungesättigten Verbindung, wobei das molare Verhältnis von (A + B) : C = 1 : 0 bis 1 : 10, vorzugsweise zwischen 1:0 und 1:5, liegt,
polymerisiert werden.

Ein weiterer Gegenstand der Erfindung sind Bindemittel für Antifouling-Anstrichmittel, welche dadurch gekennzeichnet sind, daß in Stufe 1 als polymerisierbare Monomere Mischungen aus
D) mindestens einer der Verbindungen der allgemeinen Formel III 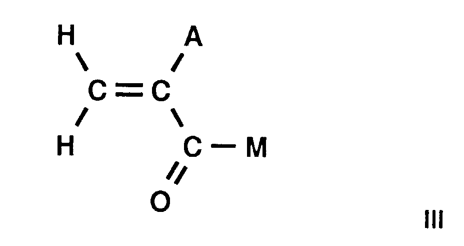 worin bedeuten:
   - A =: H, CH₃
   - M =: Cl, BH
   - B =: O, S
   und
B) mindestens einer ethylenisch ungesättigten Verbindung mit der allgemeinen Formel II 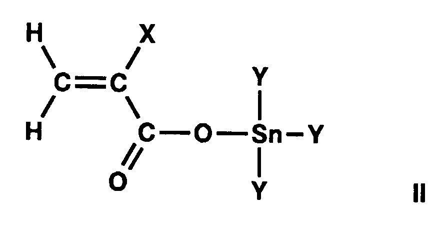 worin bedeuten:
   - X =: H, CH₃
   - Y =: C₄ - C₁₂ Alkyl, Phenyl, Cyclohexyl
   worin das molare Verhältnis von D) : B) zwischen 1 : 1 bis 5 : 1 liegt, und
C) mindestens einer ethylenisch ungesättigten Verbindung, worin das molare Verhältnis von (D + B) : C = 1 : 0 bis 1 : 10 liegt,
polymerisiert werden und anschließend in Stufe 2 in einer polymeranalogen Reaktion die erhaltenen Copolymeren mit einer oder mehreren Verbindungen der allgemeinen Formel IV, in vorzugsweise äquivalenten Mengen,

**R - Z** IV

worin bedeuten:
- Z =: funktionelle Gruppe, die mit M reagieren kann, wie z.B. BH, Cl
- M =: Cl, BH
- B =: O, S
- R =: Ph(R¹)ₙ, -C(CH₂COOR²)₂(COOR²), -CH₂-CH₂-O-Ph, -C(H)_{3-(p+q)}(CO-R²)ₚ(COOR²)_{q}, gegebenenfalls substituierte Thiadiazolylverbindungen
- Ph =: Phenyl
- R¹ =: gleich oder verschieden -C(O)H, -COOR², -CH₂-COOR², -O-R², -NH-CO-R², -NH₂, Halogen
- n =: 1 - 3
- p =: 0 - 3
- q =: 0 - 3
- p+q =: 1 - 3
- R² =: H, gegebenenfalls substituierte Alkyl-, Aryl-, Cycloalkyl-, Aralkyl-Reste mit 1 - 10 C-Atomen
umgesetzt werden.

Die gegebenenfalls substituierten Thiadiazolylverbindungen (R in Formel I bzw. IV) können 1,2,4-Thiadiazole, gegebenenfalls in 3-Position substituiert mit Halogen, C₁ - C₄ - Alkyl, Aryl, sein.

Weitere Gegenstände der Erfindung sind durch die Ansprüche gekennzeichnet.

Als Komponente A zur Herstellung von Bindemitteln für Antifouling-Anstriche können beispielsweise
aliphatische Ester- oder Carbonyl-substituierte Ester der Acrylsäure bzw. Methacrylsäure, wie z.B. Triethylcitrylmethacrylat, 2-Methacryloyloxyacetoessigsäureethylester, Methacryloyloxymalonsäurediethylester, 3-Methacryloyloxyacetylaceton;
Ester-substituierte Phenylester der Acrylsäure bzw. Methacrylsäure, wie z.B. 4-Methacryloyloxymethylbenzoat, 4-Methacryloyloxypropylbenzoat, 2-Methacryloyloxymethylsalicylat;
Formyl-substituierte Phenylester der Acrylsäure bzw. Methacrylsäure, wie z.B. 2-Formylphenylmethacrylat, 5-Brom-2-methacryloyloxy-benzaldehyd;
Halogen-substituierte Phenylester der Acrylsäure bzw. Methacrylsäure, wie z.B. 4-Bromphenylmethacrylat, 2,4,6-Tribromphenylmethacrylat, 2,4,6-Trichlorphenylmethacrylat;
Alkoxy-substituierte Phenylester der Acrylsäure bzw. Methacrylsäure, wie z.B. 2-Methoxyphenylmethacrylat, 4-Methoxyphenylmethacrylat, 4-Ethoxyphenylmethacrylat;
Carboxy-substituierte Phenylester der Acrylsäure bzw. Methacrylsäure, wie z.B. 2-Methacryloyloxysalicylsäure, 4-Methacryloyloxybenzoesäure;
Amid-substituierte Phenylester der Acrylsäure bzw. Methacrylsäure, wie z.B. 4-Methacryloyloxyacetanilid;
aromatische und aliphatische Thioester der Acrylsäure bzw. Methacrylsäure, wie z.B. 4-Chlorthiophenylmethacrylat, 2-Aminothiophenylmethacrylat, 2,6-Dichlorthiophenylmethacrylat, 4-Methoxythiophenylmethacrylat, Ethyloxythioglykolsäuremethacrylat, Methyloxythioglykolsäuremethacrylat, Methacrylsäure-S-thioglykolsäureester;
Methacryloyloxyessigsäure-Derivate, wie z.B. Methacryloyloxyessigsäure, Methoxycarbonylmethylmethacrylat, t-Butoxycarbonylmethylmethacrylat;
1,2,4-Thiadiazolyl-S-ester der Acrylsäure bzw. Methacrylsäure wie z.B. 3-Chlor-5-methacryloylthio-1,2,4-thiadiazol, 3-Phenyl-5-methacryloylthio-1,2,4-thiadiazol;
2-Phenoxyethylester der Acrylsäure bzw. Methacrylsäure, wie z.B. 2-Phenoxyethylmethacrylat
verwendet werden.

Bevorzugt eingesetzt werden Triethylcitrylmethacrylat, Methacryloyloxymalonsäurediethylester, 3-Methacryloyloxyacetylaceton, 4-Methacryloyloxymethylbenzoat, 2-Methacryloyloxymethylsalicylat, 2,4,6-Tribromphenylmethacrylat, 2,4,6-Trichlorphenylmethacrylat, 4-Methacryloyloxybenzoesäure, 4-Methoxyphenylmethacrylat, 2-Formylphenylmethacrylat, 5-Brom-2-methacryloyloxy-benzaldehyd, 4-Chlorthiophenylmethacrylat, Ethyloxyth ioglykolsäuremethacrylat, Methacryloyloxyessigsäure, Methoxycarbonylmethylmethacrylat, t-Butoxycarbonylmethylmethacrylat, 3-Phenyl-5-methacryloylthio-1,2,4-thiadiazol, 2-Phenoxyethylmethacrylat.

Als Komponente B zur Herstellung von Bindemitteln für Antifouling-Anstriche können zinnhaltige Monomere wie Tributylzinnmethacrylat, Trioctylzinnmethacrylat, Triphenylzinnmethacrylat, Tricyclohexylmethacrylat, Tributylzinnacrylat, Triphenylzinnacrylat eingesetzt werden. Bevorzugt eingesetzt wird Tributylzinnmethacrylat.

Die erfindungsgemäß mitverwendbaren ethylenisch ungesättigten Verbindungen C sind Monomere wie:
1) Carboxylgruppen enthaltende Verbindungen, wie z. B. Acrylsäure, Methacrylsäure, Maleinsäure, Itaconsäure
2) C₁ - C₁₈-Ester der Acrylsäure bzw. Methacrylsäure, wie z. B. Methylacrylat, Ethylacrylat, Propylacrylat, n-Butylacrylat, n-Hexylacrylat, Methylmethacrylat, Ethylmethacrylat, Propylmethacrylat, i-Propylmethacrylat, n-Butylmethacrylat, n-Hexylmethacrylat oder n-Dodecylmethacrylat; C₂ - C₁₈ Alkoxyester der Acrylsäure bzw. Methacrylsäure, wie z. B. Methoxyethylacrylat, Methoxyethylmethacrylat, Methoxybutylacrylat, Methoxybutylmethacrylat, Ethoxybutylacrylat oder Ethoxybutylmethacrylat; C₂ - C₈ Hydroxyalkylacrylate bzw. Hydroxyalkylmethacrylate, wie z. B. Hydroxyethylacrylat, Hydroxyethylmethacrylat, Hydroxypropylacrylat oder Hydroxypropylmethacrylat; Silicium enthaltende Ester der Acrylsäure bzw. Methacrylsäure, wie z B. (3-Methacryloyloxypropyl)-trimethoxysilan, (3-Methacryloyloxypropyl)-triethoxysilan, Trimethylsilylmethacrylat; Amide der Acrylsäure bzw. Methacrylsäure, wie z.B. Methacrylamid, N,N-Dimethylaminopropylmethacrylamid, N,N-Dimethylacrylamid
3) Vinylverbindungen, wie z. B. Styrol, -Methylstyrol, Vinyltoluol, p-Chlorstyrol, Vinylacetat, 4-Vinylpyridin oder N-Vinylpyrrolidon.

Als Komponente D für die Herstellung von Bindemitteln für Antifouling-Anstriche können z.B. Acrylsäure, Methacrylsäure, Thiomethacrylsäure, Methacryloylchlorid, Acrylolychlorid verwendet werden.

Beispiele für Verbindungen der allgemeinen Formel IV sind aliphatische und aromatische Alkohole und Thiole sowie aliphatische und aromatische Chlor-Derivate.

Die Darstellung der Antifouling-Bindemittelsysteme erfolgt durch radikalische oder ionische Copolymerisation der erfindungsgemäßen Monomeren mit den gegebenenfalls mitverwendeten ethylenisch ungesättigten Verbindungen. Als Radikalstarter (Initiatoren) können herkömmliche Peroxid- oder Azogruppen enthaltende Verbindungen, wie Dibenzoylperoxid, Bis-(,-dimethylbenzyl)-peroxid, tert-Butylhydroperoxid, Kaliumperoxodisulfat, 2,2'-Azobisisobutyronitril, 2,2'-Azobis-(2-methylbutyronitril) in Konzentrationen von 0.01 bis 2 Gew.-% der eingesetzten Monomermischung verwendet werden. Die Copolymerisation wird zweckmäßig in geeigneten Lösemitteln als Lösungs- oder Fällungspolymerisation durchgeführt. Hierzu kommen aromatische bzw. aliphatische Kohlenwasserstoffe, wie Toluol, Xylol, Hexan, Heptan, Petroleumbenzin; Ester, wie Ethylacetat, Butylacetat; Ketone, wie Aceton, Methylethylketon, Methylisobutylketon; Ether, wie Ethylenglykoldimethylether, Diethylenglykoldimethylether (Diglyme), Dibutylether, 1,4-Dioxan, Tetrahydrofuran, 1-Methoxy-2-propanol oder Lösemittel wie N,N-Dimethylformamid, Dimethylsulfoxid, N-Methylpyrrolidin-2-on, Wasser, Methanol oder Butanol, eventuell als Gemisch, in Betracht. Die Monomerkonzentration liegt je nach gewünschter Viskosität zwischen 5 und 80 Gew.-%, bezogen auf die Gesamtlösung. Die Copolymerisation selbst kann mittels bekannter Verfahren, wie z. B. durch Erhitzen der Monomeren zusammen mit den Initiatoren im Lösemittel oder durch Zutropfen der Monomeren in erhitztes Lösemittel, durchgeführt werden. In Abhängigkeit der Zusammensetzung der Monomermischung und der gewählten Copolymerisationsbedingungen werden Copolymere unterschiedlicher Zusammensetzung und mit zahlenmittleren Molekulargewichten von 5000 bis 200000 erhalten.

Die auf diese Weise hergestellten Antifouling-Bindemittel können zur Eigenschaftsverbesserung gegebenenfalls Hilfs- und Zusatzstoffe wie Pigmente, Biozide, Antiabsetzmittel, Lösungsmittel und Stabilisatoren, wie sie in US-A-5 332 430 beschrieben sind, enthalten. Als Beispiele für Pigmente seien Titandioxid, Aktivkohle, Eisenoxid sowie Blaupigmente und als Beispiele für Biozide seien Kupferoxid, Kupferthiocyanat, Zinkoxid, Zinkpyrithion, Zink-bis(dimethyl-dithiocarbamat) sowie Verbindungen, die z. B. Benzothiazole, Dithiocarbamate, Triazine, Thiodiazine, Thiadiazole, Isothiazoline, quaternäre Ammoniumsalze enthalten, genannt. Beispiele für weitere Zusatzstoffe sind Füllstoffe wie Siliciumdioxid, Kaolin, Talkum und Hilfsstoffe wie Bentonite, Aerosil und ähnliche Verbindungen.

Die vorliegende Erfindung wird in den folgenden Beispielen näher beschrieben.

### Beispiele

### Beispiel 1

### Allgemeine Synthesevorschrift zur Herstellung von Monomeren

In einem Dreihalskolben wurde 1 mol der jeweiligen Ausgangsverbindung mit alkoholischen oder phenolischen OH-Gruppen in 250 ml Chloroform gelöst. Man fügte eine äquimolare Menge an Triethylamin und gegebenenfalls noch 20 mol-% 4-(Dimethylamino)-pyridin hinzu und kühlte die Lösung auf 0 °C ab. Anschließend wurde während etwa 1 h aus einem Tropftrichter unter Rühren eine äquimolare Menge an (Meth)acrylsäurechlorid in 50 ml Chloroform zugetropft, wobei die Temperatur bei 0 °C gehalten wurde. Nach beendeter Zugabe wurde noch 1 h bei 0 °C gerührt. Man ließ den Ansatz entweder auf Raumtemperatur kommen und rührte noch weitere 8 h oder erhitzte 3 h lang unter Rückfluß. Anschließend wurde von eventuell ausgefallenem Salz abfiltriert. Die Chloroform-Lösung wurde mit Wasser, 1 n Salzsäure, gesättigter Natriumcarbonat-Lösung und nochmals mit Wasser ausgeschüttelt und dann über Natriumsulfat getrocknet. Das nach Abziehen des Chloroforms erhaltene Rohprodukt ließ sich durch Destillation oder Umkristallisation reinigen.

### Beispiel 2

### Allgemeine Synthesevorschrift zur Herstellung von Monomeren

In einem Dreihalskolben wurde 1 mol der jeweiligen Ausgangsverbindung mit aliphatischen oder aromatischen Thiol-Gruppen in 250 ml wasserfreiem Chloroform gelöst. Man fügte eine äquimolare Menge an Pyridin und eine Spatelspitze Hydrochinon hinzu und kühlte die Lösung auf 0 °C. Anschließend wurde während etwa 1 h aus einem Tropftrichter unter Rühren eine äquimolare Menge an (Meth)acrylsäurechlorid in 50 ml Chloroform zugetropft, wobei die Temperatur bei 0 °C gehalten wurde. Nach beendeter Zugabe wurde bis auf Rückflußtemperatur erhitzt und 5 h bei dieser Temperatur gerührt. Man filtrierte von eventuell ausgefallenem Salz ab und schüttelte die Chloroform-Lösung mit Wasser, 10 %iger Schwefelsäure, gesättigter Natriumcarbonat-Lösung und nochmals mit Wasser aus. Nach Trocknen über Natriumsulfat und Entfernen des Chloroforms ließen sich die Rohprodukte erhalten, die durch Destillation oder Umkristallisation gereinigt werden konnten.

### Beispiel 3

### Allgemeine Synthesevorschrift zur Herstellung von Monomeren

In einem Dreihalkolben wurden 1 mol (Meth)acrylsäure und 1.5 mol Triethylamin zusammengegeben und 1 h bei Raumtemperatur gerührt. Anschließend wurden 2 mol der Ausgangsverbindung (Chlor-Derivat) unter Rühren aus einem Tropftrichter zugetropft. Man rührte 12 h bei Raumtemperatur weiter. Das ausgefallene Salz wurde abfiltriert und mit Ethylacetat nachgewaschen. Das Filtrat wurde zweimal mit gesättigter Natriumhydrogencarbonat-Lösung und einmal mit Wasser ausgeschüttelt und über Natriumsulfat getrocknet. Das Rohprodukt ließ sich durch Destillation bzw. Umkristallisation reinigen.

### Beispiel 4

### Allgemeine Synthesevorschrift zur Herstellung von Monomeren

In einem Dreihalskolben wurden unter einem Stickstoffstrom 0.25 mol der Thiadiazol-Ausgangsverbindung in 1 l absolutem Aceton gelöst. Man gab 0.25 mol N,N'-Dicyclohexyl-carbodiimid in 100 ml absolutes Aceton hinzu. Zu der Lösung wurden unter Rühren 0.25 mol (Meth)acrylsäure in 100 ml absolutes Aceton getropft. Nach weiterem Rühren über 2 Tage bei Raumtemperatur wurde der entstandene N,N'-Dicyclohexylharnstoff abfiltriert und das Lösungsmittel entfernt. Die gebildeten Rohprodukte konnten zur Reinigung umkristallisiert werden.

### Beispiel 5

### Allgemeine Synthesevorschrift zur Herstellung von Monomeren

In einem Dreihalskolben wurden 0.5 mol der jeweiligen Ausgangsverbindung mit alkoholischen oder phenolischen OH-Gruppen in 500 ml 5 %iger wäßriger NaOH gelöst. Die Lösung wurde auf 0 °C abgekühlt. Anschließend wurden unter Rühren aus einem Tropftrichter 0.6 mol Methacrylsäurechlorid zugetropft. Man rührte weitere 2 h bei 0 °C. Das ausgefallene Produkt wurde abfiltriert und konnte durch Umkristallisieren gereinigt werden.

### Beispiel 6

### Synthese von Methacryloyloxyessigsäure

25 g t-Butyloxycarbonylmethacrylat (Synthese gemäß Beispiel 3), 200 ml Acetonitril und 0.1 g p-Toluolsulfonsäure wurden zusammengegeben und 3 h unter Rückfluß erhitzt. Das entstandene Öl wurde durch Zugabe von Petrolether auskristallisiert. Man filtrierte ab, wusch nach und trocknete im Trockenschrank.

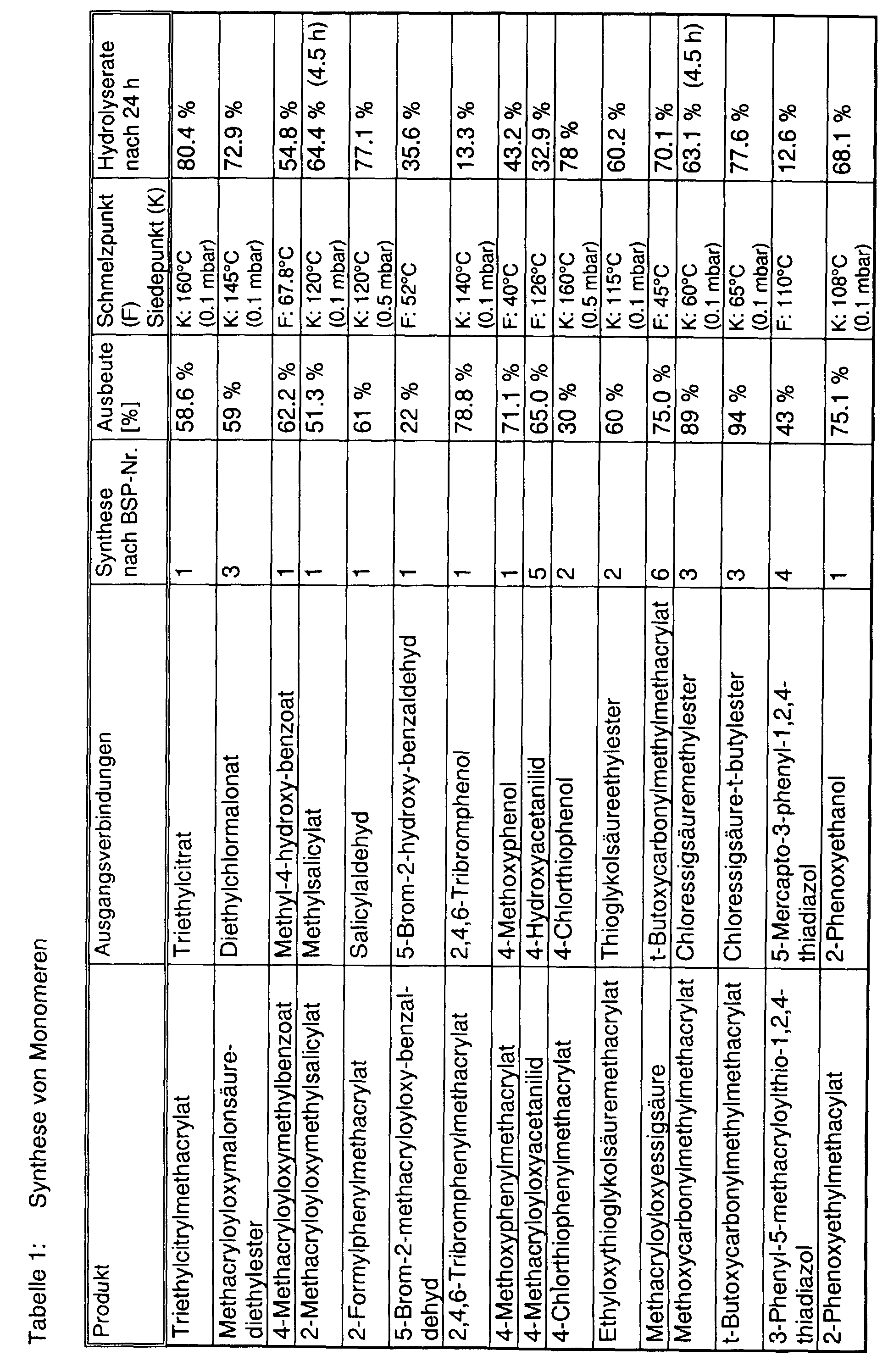

### Beispiel 7

### Allgemeine Vorschrift zur Copolymerisation der Monomeren

Die je nach gewünschter Copolymerzusammensetzung entsprechende Menge der Komponente A (funktionalisiertes [Meth]acrylat), der Komponente B (zinnhaltiges Comonomer) und der Komponente C (Comonomer) wurden zusammen mit dem Lösungsmittel und dem Initiator in einen Dreihalskolben gegeben. Zur Enffernung von Sauerstoff rührte man die Lösung 30 min unter einem konstanten Stickstoffstrom. Anschließend wurde die Mischung auf 80 °C erwärmt und unter diesen Bedingungen 4 h lang copolymerisiert. Der Feststoffgehalt der Lösung wurde bestimmt. Durch Ausfällen in Methanol oder Petrolether und Isolierung in bekannter Weise (Filtration) ließ sich das Copolymere rein gewinnen.
*) stat = statistische Verteilung

### Beispiel 8

### Polymeranaloge Reaktion: Synthese des Copolymers Poly[methoxycarbonylmethylmethacrylat-stat*-tributylzinnmethacrylat-stat*-methylmethacrylat]

0.2 mol Methacrylsäure, 0.2 mol Tributylzinnmethacrylat und 0.4 mol Methylmethacrylat wurden in Methanol copolymerisiert (gemäß Beispiel 7). Das Copolymere wurde in kaltem Petrolether ausgefällt, abfiltriert und getrocknet. 25 g des auf diese Weise erhaltenen Copolymers wurden in einem Dreihalskolben in 220 g Dimethylformamid gelöst. Nach Zugabe von 10.5 g Triethylamin wurde die Lösung 1 h bei Raumtemperatur gerührt. Anschließend gab man 15.5 g Chloressigsäuremethylester aus einem Tropftrichter hinzu und rührte weitere 12 h bei Raumtemperatur. Das ausgefallene Salz wurde abfiltriert. Aus dem Filtrat (Copolymerlösung) ließ sich das Copolymere durch Ausfällen in Methanol oder Petrolether und Isolierung in bekannter Weise (Filtration) rein gewinnen.

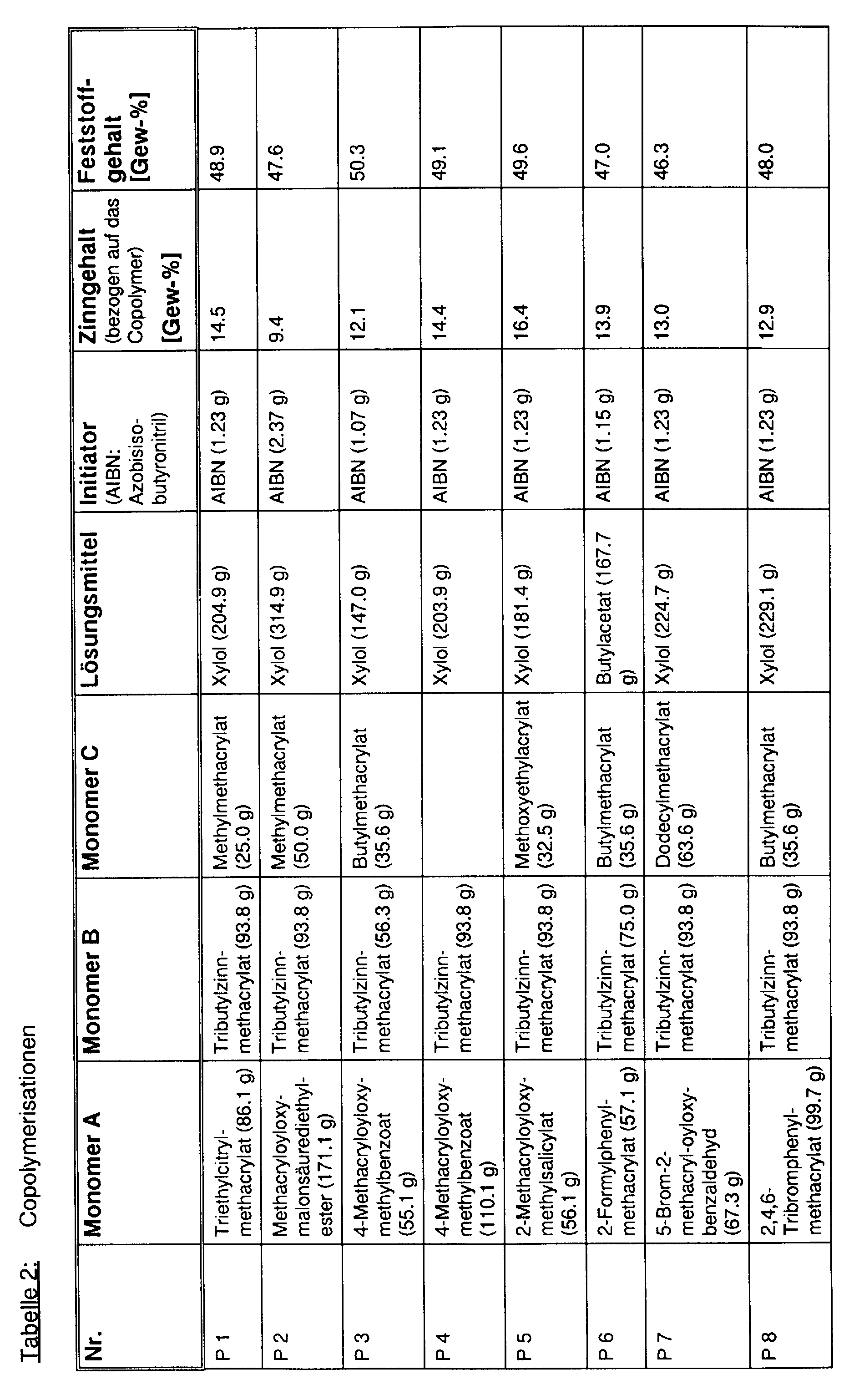

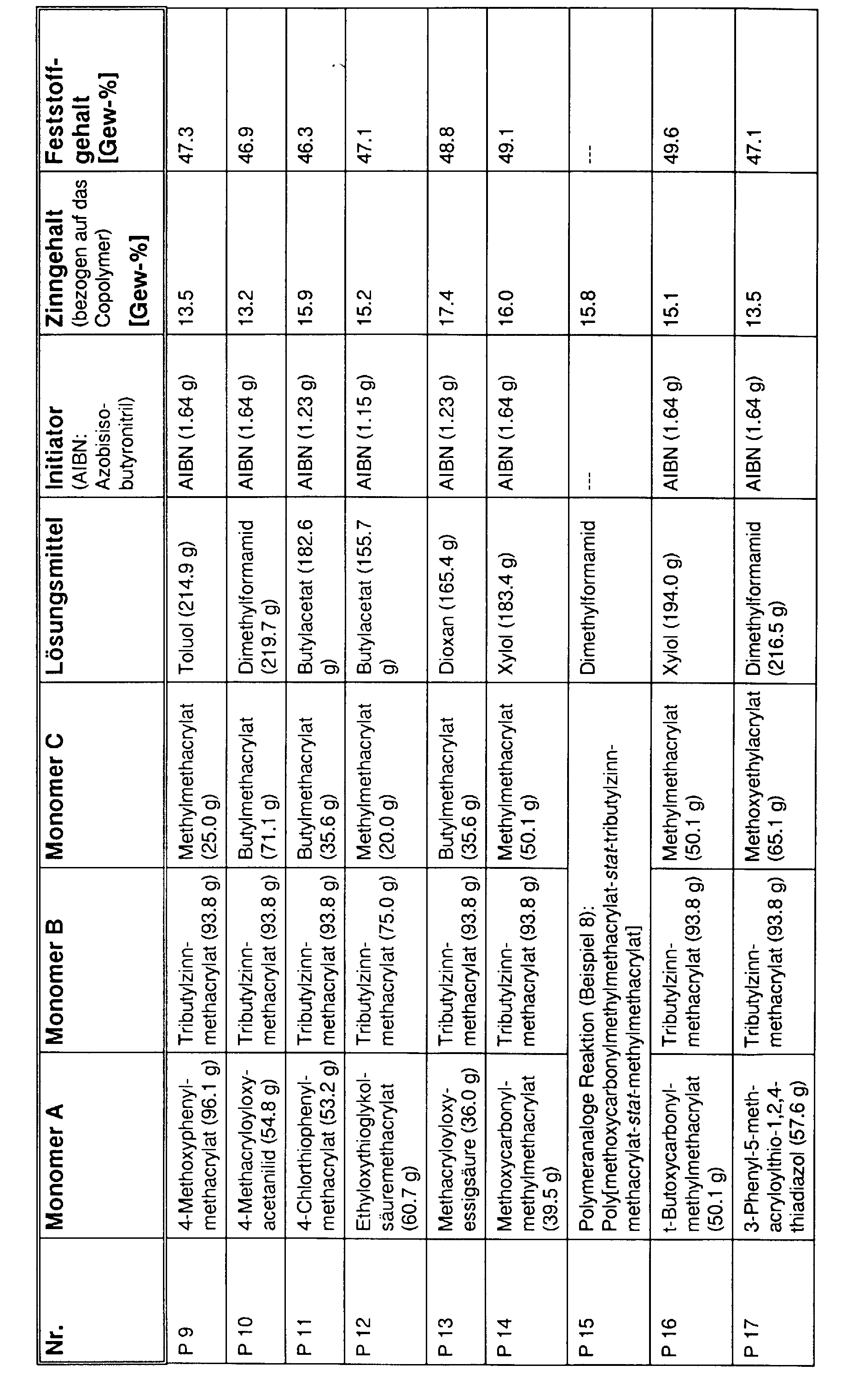

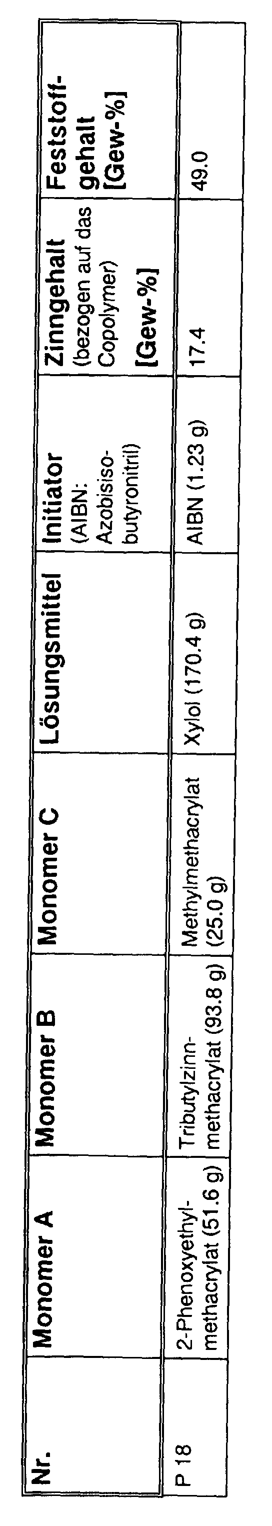

### Bestimmung der Hydrolyserate

Zur Bestimmung der Hydrolyseraten der erfindungsgemäßen Bindemittelsysteme in alkalischem Milieu wurden die Leitfähigkeits- bzw. pH-Wert-Änderungen in Abhängigkeit von der Zeit gemessen. Eine direkte Messung im Meerwasser (pH: 8.1 - 8.3) war aus meßtechnischen Gründen (hohe Eigenleitfähigkeit durch den Salzgehalt) nicht möglich.

### Die Messungen wurden wie folgt durchgeführt:

300 ml bidestilliertes und entgastes Wasser wurden in einem Dreihalskolben - ausgerüstet mit einem Rührer, pH-Elektrode (Fa. WTW, Typ E50-1,5) und einer Leitfähigkeitselektrode (Fa. WTW, Typ LTA 1, Zellkonstante 0.996) - mittels Zugabe von NaOH-Plätzchen auf einen pH-Wert von 12 eingestellt. Das gesamte System wurde auf 25 0.1 °C thermostatisiert (Haake Thermostat GH-D8). Als Meßgeräte wurden ein pH-Meter (Fa. WTW, Typ pH 192) und ein Leitfähigkeitsmeßgerät (Fa. WTW, Typ LF 530) eingesetzt.

Die monomeren Verbindungen gemäß Tabelle 1 wurden in die wäßrige Lösung eingetragen; im Falle des Bindemittelsystems in Lösung gemäß Tabelle 2 wurde die Lösung zur Erzielung praxisrelevanter Schichtdickenverhältnisse auf Glasperlen mit einem Durchmesser von 3 mm aufgebracht und das Lösungsmittel mit Hilfe einer Vakuumpumpe entfernt. Die Einwaage des polymeren Bindemittelsystems wurde so gewählt, daß nach theoretisch vollständiger Hydrolyse noch ein ca. 50 %iger Natronlaugeüberschuß verblieb.

Zur Bestimmung der Hydrolyseraten wurden die beschichteten Glasperlen in die obengenannte Lösung gegeben. Die pH-Wert- und Leitfähigkeits-Änderungen wurden in Abhängigkeit von der Zeit direkt in der Lösung bestimmt, die zur besseren Durchmischung gerührt wurde. Die Meßdauer betrug 24 h.

Die Berechnung des Hydrolysegrades basierte auf der Änderung des pH-Wertes, der durch die Hydrolyse der entsprechenden funktionellen Gruppen abgesenkt wurde (Bildung von Carboxylgruppen). Durch Messung des pH-Wertes nach 24 h (Start-pH: 12.00) und Berechnung der Anzahl der funktionellen Gruppen (basierend auf der Einwaage) ließ sich die Hydrolyserate ermitteln (%, basierend auf der Anzahl hydrolysierbarer funktioneller Gruppen).

Die Ergebnisse für die Monomeren (siehe Tabelle 1) und die folgende Tabelle 3 zeigen deutlich, daß die erfindungsgemäßen polymeren Bindemittelsysteme unter den gewählten Bedingungen in alkalischem Milieu hydrolysierten.

**Tabelle 3 :**

| Hydrolyse von polymeren Bindemittelsystemen | |
|---|---|
| Bindemittelsystem | prozentualer Anteil der potentiell hydrolysierbaren Gruppen, die innerhalb von 24 h hydrolysiert werden |
| P 1 | 32.8 % |
| P 2 | 27.1 % |
| P 3 | 26.2 % |
| P 4 | 24.9 % |
| P 5 | 28.9 % |
| P 6 | 34.9 % |
| P 7 | 28.0 % |
| P 8 | 29.2 % |
| P 9 | 26.1 % |
| P 10 | 24.1 % |
| P 11 | 32.5 % |
| P 12 | 28.3 % |
| P 13 | 39.3 % |
| P 14 | 32.4 % |
| P 15 | 29.8 % |
| P 16 | 29.6 % |
| P 17 | 23.2 % |
| P 18 | 33.2 % |

| Vergleichsbeispiele: | |
|---|---|
| Poly(methylmethacrylat) | 3,0 % |
| Poly-[tributylzinnmethacrylat-stat-methylmethacrylat] {1:2, mol:mol} | 30,9 % |

Die Wirksamkeit der erfindungsgemäßen Bindemittelsysteme gegenüber Meeresorganismen wurde durch Auslagerungsversuche in der Nordsee (Cuxhaven) ermittelt.

Zu diesem Zweck wurden Testplatten aus Polyvinylchlorid (10 x 15 x 0.4 cm) mit Antifoulinganstrichen, die gemäß Beispiel 9 hergestellt wurden, versehen.

### Beispiel 9

### Allgemeine Vorschrift zur Herstellung von Antifouling-Anstrichmitteln

75 g des jeweiligen Copolymeren (z. B. P 1 - P 18) als 40 - 50 %ige Lösung, 5 g Kupfer(I)oxid, 13 g Zinkoxid, 11.1 g Bentone 38 (Geliermittel auf Basis Montmorillonit-Erde, Titangesellschaft, 6 %ige Lösung in Xylol) und 10 g Xylol wurden eine Stunde intensiv vermahlen. Auf diese Weise wurden die Antifoulinganstriche 1 bis 18 erhalten (Tabelle 4).

Nach einer Entfettung mit Lösungsmitteln (z. B. Aceton) wurden die PVC-Platten zweimal mit der Antifoulingfarbe gestrichen und 48 h bei Raumtemperatur getrocknet. Die Trockenfilmdicke lag bei 80 - 120 µm. Die beschichteten PVC-Platten wurden anschließend in einen Kunststoffrahmen eingespannt und über einen Zeitraum von 12 mon ca. 0.5 - 1.5 m permanent unter der Wasseroberfläche ausgelagert. Als Vergleichsdaten dienten unbehandelte PVC-Platten, ein Testanstrich aus Poly-[tributylzinnmethacrylat-stat-methylmethacrylat] {1:2, mol:mol; kommerziell verwendetes Bindemittel, Zinngehalt des Copolymeren: 20.6 Gew.-%}, ein Testanstrich aus Poly-[tributylzinnmethacrylat-stat-methylmethacrylat] {1:3, mol:mol; reduzierter Zinngehalt des Copolymeren: 17.6 Gew.-%} sowie ein zinnfreier Testanstrich aus Polymethylmethacrylat als nicht funktionalisierte Polymerkomponente, die gemäß Beispiel 9 hergestellt wurden.

Die nachfolgende Tabelle 4 zeigt deutlich, daß die erfindungsgemäßen Bindemittel mit reduziertem Zinngehalt und funktionalisierten (Meth)acrylaten während des Beobachtungszeitraums eine biozide Wirkung gegenüber tierischem und pflanzlichem Bewuchs aufweisen. Der Testanstrich Poly-[tributylzinnmethacrylatstat-methylmethacrylat] {1:3, mol:mol} mit seinem reduzierten Zinngehalt ohne die erfindungsgemäßen funktionalisierten (Meth)acrylate weist demgegenüber eine deutlich schlechtere Antifouling-Wirksamkeit auf. Die zinnfreien Testplatten ohne die erfindungsgemäßen Verbindungen zeigten einen nahezu vollständigen Bewuchs durch Algen, Balaniden und Muscheln.

**Tabelle 4:**

| Seewasser-Auslagerungen von Testplatten in Cuxhaven | | | |
|---|---|---|---|
| **Anstrich** | **3 Monate** | **6 Monate** | **12 Monate** |
| Antifoulinganstrich 1 | 0 | 0 | 0 |
| Antifoulinganstrich 2 | 0 | 0 | 0 |
| Antifoulinganstrich 3 | 0 | 0 | 0 |
| Antifoulinganstrich 4 | 0 | 0 | 10 |
| Antifoulinganstrich 5 | 0 | 0 | 0 |
| Antifoulinganstrich 6 | 0 | 0 | 0 |
| Antifoulinganstrich 7 | 0 | 0 | 5 |
| Antifoulinganstrich 8 | 0 | 0 | 0 |
| Antifoulinganstrich 9 | 0 | 0 | 0 |
| Antifoulinganstrich 10 | 0 | 0 | 10 |
| Antifoulinganstrich 11 | 0 | 0 | 0 |
| Antifoulinganstrich 12 | 0 | 0 | 0 |
| Antifoulinganstrich 13 | 0 | 0 | 5 |
| Antifoulinganstrich 14 | 0 | 0 | 0 |
| Antifoulinganstrich 15 | 0 | 0 | 0 |
| Antifoulinganstrich 16 | 0 | 0 | 0 |
| Antifoulinganstrich 17 | 0 | 0 | 10 |
| Antifoulinganstrich 18 | 0 | 0 | 0 |
| | | | |

| Vergleichsbeispiele: | | | |
|---|---|---|---|
| unbehandelte PVC-Platte | 30 | 80 | 100 |
| PMMA-Anstrich | 20 | 80 | 100 |
| Poly-[tributylzinnmethacrylat-stat-methylmethacrylat] {1:2, mol:mol} | 0 | 0 | 0 |
| Poly-[tributylzinnmethacrylat-stat-methylmethacrylat] {1:3, mol:mol} | 0 | 20 | 60 |
| Zahlenangaben: % der bewachsenen Fläche, bezogen auf die Gesamtfläche 0 = kein Bewuchs 100 = kompletter Bewuchs | | | |

## Patentansprüche

1. Bindemittel für Antifouling-Anstrichmittel, herstellbar durch Copolymerisation von polymerisierbaren Monomeren, dadurch gekennzeichnet, daß als polymerisierbare Monomere Mischungen aus
A) mindestens einer der Verbindungen der allgemeinen Formel I 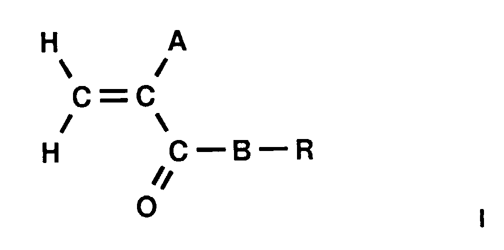 worin bedeuten:
A = H, CH₃
B = O, S
R = Ph(R¹)ₙ, -C(CH₂COOR²)₂(COOR²), -CH₂-CH₂-O-Ph, -C(H)_{3-(p+q)}(CO-R²)ₚ(COOR²)_{q}, gegebenenfalls substituierte Thiadiazolylverbindungen
Ph = Phenyl
R¹ = gleich oder verschieden -C(O)H, -COOR², -CH₂-COOR², -O-R², -NH-CO-R², -NH₂, Halogen
n = 1 - 3
p = 0 - 3
q = 0 - 3
p+q = 1 - 3
R² = H, gegebenenfalls substituierte Alkyl-, Aryl-, Cycloalkyl-, Aralkyl-Reste mit 1 - 10 C-Atomen
und
B) mindestens einer ethylenisch ungesättigten Verbindung mit der allgemeinen Formel II 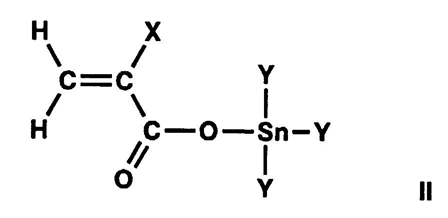 worin bedeuten:
X = H, CH₃
Y = C₄ - C₁₂ Alkyl, Phenyl, Cyclohexyl
worin das molare Verhältnis von A) : B) zwischen 1 : 1 bis 5 : 1 liegt und
C) mindestens einer ethylenisch ungesättigten Verbindung, wobei das molare Verhältnis von (A + B) : C = 1 : 0 bis 1 : 10 liegt,
polymerisiert werden.

2. Bindemittel gemäß Anspruch 1, dadurch gekennzeichnet, daß das Verhältnis von A : B zwischen 1,5 : 1 bis 3 : 1 und das Verhältnis von (A + B) : C zwischen 1 : 0 und 1 : 5 liegt.

3. Bindemittel gemäß den Ansprüchen 1 und 2, dadurch gekennzeichnet, daß als polymerisierbares Monomeres der Komponente A) Verbindungen der allgemeinen Formel I 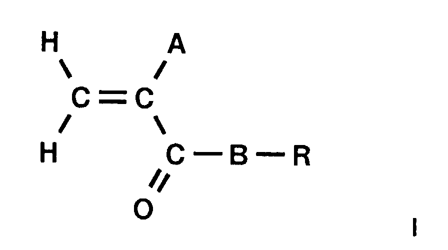 worin bedeuten:
A = H, CH₃
B = O, S
R = Ph(R¹)ₙ, -C(CH₂COOR²)₂(COOR²), -CH₂-CH₂-O-Ph, -CH₂-COOR², gegebenenfalls substituierte Thiadiazolylverbindungen
Ph = Phenyl
R¹ = gleich oder verschieden -C(O)H, -COOR², -O-R², Halogen
n = 1 - 3
R² = H, gegebenenfalls substituierte Alkyl-, Aryl-, Cycloalkyl-, Aralkyl-Reste mit 1 - 10 C-Atomen
und als polymerisierbares Monomeres der Komponente B) Tributylzinnmethacrylat verwendet werden.

4. Bindemittel gemäß den Ansprüchen 1 bis 3, dadurch gekennzeichnet, daß als Komponente
A) Triethylcitrylmethacrylat, Methacryloyloxymalonsäurediethylester, 3-Methacryloyloxyacetylaceton, 4-Methacryloyloxymethylbenzoat, 2-Methacryloyloxymethylsalicylat, 2,4,6-Tribromphenylmethacrylat, 2,4,6-Trichlorphenylmethacrylat, 4-Methacryloyloxybenzoesäure, 4-Methoxyphenylmethacrylat, 2-Formylphenylmethacrylat, 5-Brom-2-methacryloyloxy-benzaldehyd, 4-Chlorthiophenylmethacrylat, Ethyloxythioglykolsäuremethacrylat, Methacryloyloxyessigsäure, Methoxycarbonylmethylmethacrylat, t-Butoxycarbonylmethylmethacrylat, 3-Phenyl-5-methacryloylthio-1,2,4-thiadiazol, 2-Phenoxyethylmethacrylat.
und als Komponente
B) Tributylzinnmethacrylat
und gegebenenfalls als Komponente
C) Methacrylsäure, Butylacrylat, Methylmethacrylat, Butylmethacrylat, n-Hexylmethacrylat, n-Dodecylmethacrylat, 2-Hydroxyethylmethacrylat, 2-Methoxyethylacrylat, 3-Methacryloyloxypropyl-trimethoxysilan allein oder in Mischung
polymerisiert werden.

5. Bindemittel für Antifouling-Anstrichmittel, dadurch gekennzeichnet, daß in Stufe 1 als polymerisierbare Monomere Mischungen aus
D) mindestens einer der Verbindungen der allgemeinen Formel III 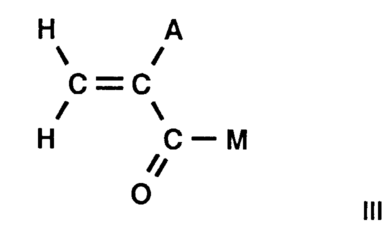 worin bedeuten:
A = H, CH₃
M = Cl, BH
B = O, S
und
B) mindestens einer ethylenisch ungesättigten Verbindung mit der allgemeinen Formel II 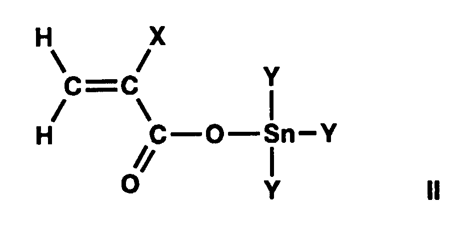 worin bedeuten:
X = H, CH₃
Y = C₄ - C₁₂ Alkyl, Phenyl, Cyclohexyl
worin das molare Verhältnis von D) : B) zwischen 1 : 1 bis 5 : 1 liegt und
C) mindestens einer ethylenisch ungesättigten Verbindung, worin das molare Verhältnis von (D + B) : C = 1: 0 bis 1 : 10 liegt,
polymerisiert werden und anschließend in Stufe 2 in einer polymeranalogen Reaktion die erhaltenen Copolymeren mit einer oder mehreren Verbindungen der allgemeinen Formel IV
**R - Z** IV
worin bedeuten:
Z = funktionelle Gruppe, die mit M reagieren kann,
M = Cl, BH
B = O, S
R = Ph(R¹)ₙ, -C(CH₂COOR²)₂(COOR²), -CH₂-CH₂-O-Ph, -C(H)_{3-(p+q)}(CO-R²)ₚ(COOR²)_{q}, gegebenenfalls substituierte Thiadiazolylverbindungen
Ph = Phenyl
R¹ = gleich oder verschieden -C(O)H, -COOR², -CH₂-COOR², -O-R², -NH-CO-R², -NH₂, Halogen
n = 1 - 3
p = 0-3
q = 0 - 3
p+q = 1 - 3
R² = H, gegebenenfalls substituierte Alkyl-, Aryl-, Cycloalkyl-, Aralkyl-Reste mit 1 - 10 C-Atomen
umgesetzt werden.

6. Antifouling-Anstrichmittel bestehend aus Bindemitteln, herstellbar durch Copolymerisation gemäß den Ansprüchen 1 bis 5, sowie gegebenenfalls Hilfs- und Zusatzstoffen, Pigmenten, Antiabsetzmittel, Lösungsmittel, Bioziden, Stabilisatoren.

## Claims

1. Binder for antifouling coating compositions, which can be prepared by copolymerising polymerisable monomers, characterised in that there are polymerised as the polymerisable monomers mixtures of
A) at least one of the compounds of the general formula I 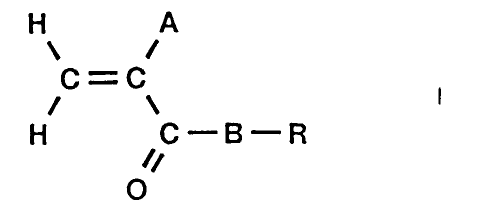 in which:
A = H, CH₃
B = O, S
R = Ph(R¹)ₙ, -C(CH₂COOR²)₂(COOR²), -CH₂-CH₂-O-Ph, -C(H)_{3-(p+q)}(CO-R²)ₚ(COOR²)_{q}, unsubstituted or substituted thiadiazolyl compounds
Ph = phenyl
the substituents R¹ may be identical or different and represent -C(O)H, -COOR², -CH₂-COOR², -O-R², -NH-CO-R², -NH₂, halogen
n = 1-3
p = 0 - 3
q = 0 - 3
p+q= 1 - 3
R² = H, unsubstituted or substituted alkyl, aryl, cycloalkyl, aralkyl radicals having from 1 to 10 carbon atoms
and
B) at least one ethylenically unsaturated compound having the general formula II 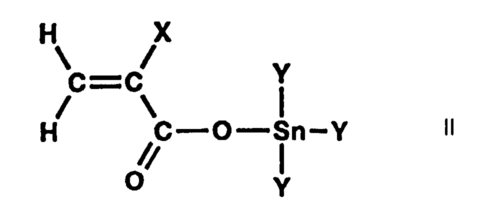 in which:
X = H, CH₃
Y = C₄-C₁₂alkyl, phenyl, cyclohexyl
wherein the molar ratio of A) to B) is from 1:1 to 5:1
and
C) at least one ethylenically unsaturated compound, the molar ratio of (A + B) to C being from 1:0 to 1:10.

2. Binder according to claim 1, characterised in that the ratio of A to B is from 1.5:1 to 3:1 and the ratio of (A + B) to C is from 1:0 to 1:5.

3. Binder according to claims 1 and 2, characterised in that there are used as the polymerisable monomer of component A) compounds of the general formula I 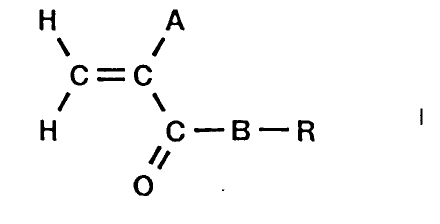 in which:
A = H, CH₃
B = O, S
R = Ph(R¹)ₙ, -C(CH₂COOR²)₂(COOR²), -CH₂-CH₂-O-Ph, -CH₂-COOR², unsubstituted or substituted thiadiazolyl compounds
Ph = phenyl
the substituents R¹ may be identical or different and represent -C(O)H, -COOR², -O-R², halogen
n = 1 - 3
R² = H, unsubstituted or substituted alkyl, aryl, cycloalkyl, aralkyl radicals having from 1 to 10 carbon atoms
and as the polymerisable monomer of component B) tributyltin methacrylate.

4. Binder according to claims 1 to 3, characterised in that there are polymerised as component
A) triethylcitryl methacrylate, diethyl methacryloyloxymalonate, 3-methacryloyloxyacetylacetone, 4-methacryloyloxymethyl benzoate, 2-methacryloyloxymethyl salicylate, 2,4,6-tribromophenyl methacrylate, 2,4,6-trichlorophenyl methacrylate, 4-methacryloyloxybenzoic acid, 4-methoxyphenyl methacrylate, 2-formylphenyl methacrylate, 5-bromo-2-methacryloyloxybenzaldehyde, 4-chlorothiophenyl methacrylate, ethyloxythioglycolic acid methacrylate, methacryloyloxyacetic acid, methoxycarbonylmethyl methacrylate, tert-butoxycarbonylmethyl methacrylate, 3-phenyl-5-methacryloylthio-1,2,4-thiadiazole, 2-phenoxyethyl methacrylate,
and as component
B) tributyltin methacrylate
and, optionally, as component
C) methacrylic acid, butyl acrylate, methyl methacrylate, butyl methacrylate, n-hexyl methacrylate, n-dodecyl methacrylate, 2-hydroxyethyl methacrylate, 2-methoxyethyl methacrylate, 3-methacryloyloxypropyltrimethoxysilane, alone or in the form of a mixture.

5. Binder for antifouling coating compositions, characterised in that in stage 1 there are polymerised as the polymerisable monomers mixtures of
D) at least one of the compounds of the general formula III 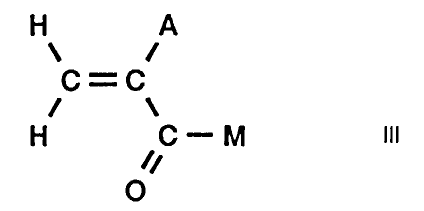 in which:
A = H, CH₃
M = Cl, BH
B = O, S
and
B) at least one ethylenically unsaturated compound having the general formula II 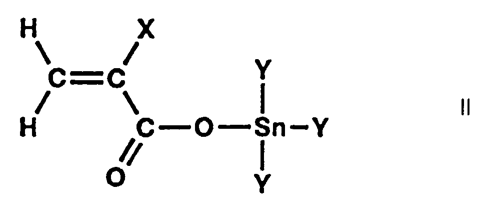 in which:
X = H, CH₃
Y = C₄-C₁₂alkyl, phenyl, cyclohexyl
wherein the molar ratio of D) to B) is from 1:1 to 5:1
and
C) at least one ethylenically unsaturated compound, wherein the molar ratio of (D + B) to C is from 1:0 to 1:10,
and then, in stage 2, the resulting copolymers are reacted in a polymer-analogous reaction with one or more compounds of the general formula IV
R-Z IV
in which:
Z = a functional group that is able to react with M
M = Cl, BH
B = O, S
R = Ph(R¹)ₙ, -C(CH₂COOR²)₂(COOR²), -CH₂-CH₂-O-Ph, -C(H)_{3-(p+q)}(CO-R²)ₚ(COOR²)_{q}, unsubstituted or substituted thiadiazolyl compounds
Ph = phenyl
the substituents R¹ may be identical or different and represent -C(O)H, -COOR², -CH₂-COOR², -O-R², -NH-CO-R², -NH₂, halogen
n = 1 - 3
p = 0 - 3
q = 0 - 3
p+q = 1 - 3
R² = H, unsubstituted or substituted alkyl, aryl, cycloalkyl, aralkyl radicals having from 1 to 10 carbon atoms.

6. Antifouling coating composition comprising binders which can be prepared by copolymerisation according to claims 1 to 5 and, where appropriate, auxiliary substances, additives, pigments, antisettling agents, solvents, biocides, stabilisers.

## Revendications

1. Liant pour peintures antifouling pouvant être produit par copolymérisation de monomères polymérisables, caractérisé en ce que l'on polymérise comme monomères polymérisables des mélanges de :
A) au moins un des composés de formule générale I : 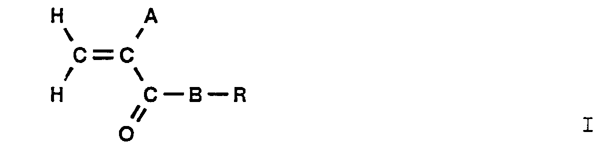 dans laquelle :
A = H, CH₃
B = O, S
R = Ph(R¹)ₙ, -C(CH₂COOR²)₂(COOR²), -CH₂-CH₂-O-Ph, -C(H)_{3-(p+q)} (CO-R²)ₚ(COOR²)_{q} ou des groupes thiadiazolyle le cas échéant substitués
Ph = phényle
R¹ = -C(O)H, -COOR², -CH₂-COOR², -O-R², -NH-CO-R², -NH₂, halogène, identiques ou différents
n = 1 à 3
p = 0 à 3
q = 0 à 3
p+q = 1 à 3
R² = H ou groupes alkyle, aryle, cycloalkyle, aralkyle avec 1 à 10 atomes de carbone, le cas échéant substitués ;
et
B) au moins un composé éthyléniquement insaturé de formule générale II : 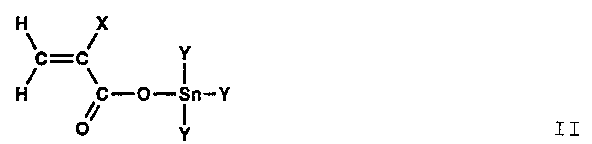 dans laquelle :
X = H, CH₃
Y = alkyle en C₄ à C₁₂, phényle, cyclohexyle,
le rapport molaire A): B) étant compris entre 1:1 et 5:1 ; et
C) au moins un composé éthyléniquement insaturé, le rapport molaire (A+B):C étant de 1:0 à 1:10.

2. Liant selon la revendication 1, caractérisé en ce que le rapport A:B est de 1,5:1 à 3:1 et le rapport (A+B):C est compris entre 1:0 et 1:5.

3. Liant selon les revendications 1 et 2, caractérisé en ce que l'on utilise comme monomère polymérisable du composant A) des composés de formule générale I 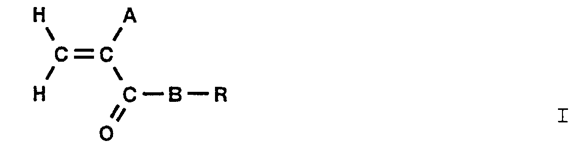 dans laquelle :
A = H, CH₃
B = O, S
R = Ph(R¹)ₙ, -C(CH₂COOR²)₂(COOR²), -CH₂-CH₂-O-Ph, -CH₂-COOR² ou des groupes thiadiazolyle le cas échéant substitués
Ph = phényle
R¹ = -C(O)H, -COOR², -O-R², halogène, identiques ou différents
n = 1 à 3
R² = H ou groupes alkyle, aryle, cycloalkyle, aralkyle avec 1 à 10 atomes de carbone, le cas échéant substitués ;
et, en tant que monomère polymérisable du composant B), du méthacrylate de tributylétain.

4. Liant selon les revendications 1 à 3, caractérisé en ce que l'on polymérise comme composant
A) le ou la méthacrylate de triéthylcitryle, méthacryloyloxymalonate de diéthyle, 3-méthacryloyloxyacétylacétone, benzoate de 4-méthacryloyloxyméthyle, salicylate de 2-méthacryloyloxyméthyle, méthacrylate de 2,4,6-tribromophényle, méthacrylate de 2,4,6-trichlorophényle, acide 4-méthacryloyloxybenzoïque, méthacrylate de 4-méthoxyphényle, méthacrylate de 2-formylphényle, 5-bromo-2-méthacryloyloxybenzaldéhyde, méthacrylate de 4-chlorothiophényle, méthacrylate d'acide éthyloxythioglycolique, acide méthacryloyloxyacétique, méthacrylate de méthoxycarbonylméthyle, méthacrylate de t-butoxycarbonylméthyle, 3-phényl-5-méthacryloylthio-1,2,4-thiadiazole, méthacrylate de 2-phénoxyéthyle ;
et comme composant
B) le méthacrylate de tributylétain ;
et le cas échéant comme composant
C) le ou la acide méthacrylique, acrylate de butyle, méthacrylate de méthyle, méthacrylate de butyle, méthacrylate de n-hexyle, méthacrylate de n-dodécyle, méthacrylate de 2-hydroxyéthyle, acrylate de 2-méthoxyéthyle,3-méthacryloyloxypropyltriméthoxysilane, seuls ou en mélange.

5. Liant pour peintures antifouling, caractérisé en ce que , à l'étape 1, on polymérise comme monomères polymérisables des mélanges de :
D) au moins un des composés de formule générale III : 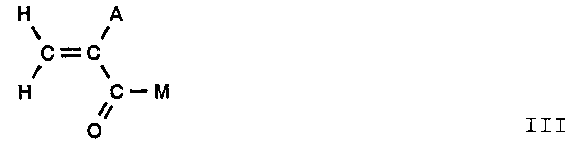 dans laquelle :
A = H, CH₃
M = Cl, BH
B = O, S ;
et
B) au moins un composé éthyléniquement insaturé de formule générale II : 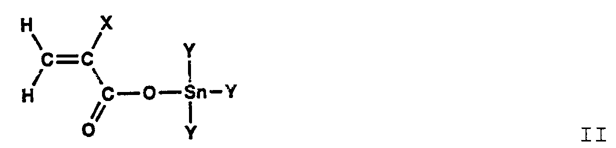 dans laquelle :
X = H, CH₃
Y = alkyle en C₄ à C₁₂, phényle, cyclohexyle,
le rapport molaire D):B) étant compris entre 1:1 et 5:1 ; et
C) au moins un composé éthyléniquement insaturé, le rapport molaire (D+B):C étant de 1:0 à 1:10 ;
et en ce que, ensuite, à l'étape 2, dans une réaction analogue aux polymères, on fait réagir les copolymères obtenus avec un ou plusieurs composés de formule générale IV :
R - Z IV
avec :
Z = groupes fonctionnels réactifs vis-à-vis de M
M = Cl, BH
B = O, S
R = Ph(R¹)ₙ, -C(CH₂COOR²)₂(COOR²), -CH₂-CH₂-O-Ph, -C(H)_{3-(p+q)} (CO-R²)ₚ(COOR²)_{q} ou des groupes thiadiazolyle le cas échéant substitués
Ph = phényle
R¹ = -C(O)H, -COOR², -CH₂-COOR² , -O-R², -NH-CO-R², -NH₂ , halogène, identiques ou différents
n = 1 à 3
p = 0 à 3
q = 0 à 3
p+q = 1 à 3
R² = H ou groupes alkyle, aryle, cycloalkyle, aralkyle avec 1 à 10 atomes de carbone, le cas échéant substitués.

6. Peintures antifouling composées de liants pouvant être préparés par copolymérisation selon les revendications 1 à 5, ainsi le cas échéant que de substances auxiliaires et additives, de pigments, d'agents anti-déposition, de solvants, de biocides, de stabilisants.
